# EUROPEAN PATENT APPLICATION

(11) **EP 4 361 059 A1**
(43) Date of publication of application: **01.05.2024**
(21) Application number: 23190818.7
(22) Date of filing: 10.08.2023
(51) Int. Cl.: B65D 8/00, B65D 25/16, B65D 51/20

(54) **TENNIS BALL CONTAINER**

(30) Priority: 31.10.2022 JP 2022174524
(71) Applicant: Sumitomo Rubber Industries, Ltd., Kobe-shi, Hyogo 651-0072 (JP)
(72) Inventor: HIROSE, Ryohei, Kobe-shi, 651-0072 (JP); NIWA, Kunio, Kobe-shi, 651-0072 (JP); SAKAMOTO, Naoka, Kobe-shi, Hyogo-ken, 651-0072 (JP)
(74) Representative: Manitz Finsterwald Patent- und Rechtsanwaltspartnerschaft mbB

(57) **Abstract**

A tennis ball container 4 includes a bottle 8, a paper label 10, an inner lid 12, and a paper cap 14. The bottle 8 includes a bottom 18 and a neck 20. The paper label 10 is accommodated in the bottle 8, and is positioned along an inner peripheral surface of the bottle 8. The paper label 10 can be obtained by printing paper. The paper is obtained by agglutinating biodegradable fibers together. In an axial direction of the bottle 8, a position of an upper edge 26 of the paper label 10 is the same as a position of the neck 20, or the position of the upper edge 26 of the paper label 10 is shifted from the position of the neck 20 toward the bottom 18.

## Description

### CROSS-REFERENCE TO RELATED APPLICATION

This application claims priority to and the benefit of Japanese Patent Application No. 2022-174524, filed on October 31, 2022, the entire disclosure of which is incorporated herein by reference.

### BACKGROUND OF THE INVENTION

### Field of the Invention

The present specification discloses a container that is used for the purpose of, for example, transporting, storing, displaying, or carrying tennis balls.

### Description of the Related Art

A tennis ball has a hollow structure. The internal pressure of a general regulation tennis ball is higher than the atmospheric pressure. Such a tennis ball is put in a container, which is then sealed and stored, the container having an internal pressure higher than the atmospheric pressure in order to maintain the internal pressure of the tennis ball. There are cases where a so-called pressure-less ball is contained in a container. Japanese Laid-Open Patent Application Publication No. 2012-111524 discloses one example of a tennis ball container. This container includes a bottle and a lid. The material of the bottle is a synthetic resin, and the material of the lid is a metal.

A tennis ball container in general has a shrink film label on its bottle surface. The label displays a brand name, a manufacturer name, a content amount, a mark required by law, etc. The label is colored so that it can shield rays of light. Discoloration of the tennis ball in the container can be suppressed by the label.

The material of the shrink film is a synthetic resin. After the container is opened, if the label is littered, the littered label continues to exist in nature. Such littered garbage has a negative impact on the natural environment and ecosystem. The synthetic resin, of which the shrink film is made, is derived from petroleum. Therefore, the littering of the label has a negative impact on the sustainability of petroleum resources. In a case where such labels are incinerated, carbon dioxide is generated as a result, which facilitates global warming. In light of the "Sustainable Development Goals" adopted at the United Nations Sustainable Development Summit 2015, the use of shrink film labels is not preferable.

It is the intention of the applicant of the present application to provide a tennis ball container that is in line with the spirit of the "Sustainable Development Goals".

### SUMMARY OF THE INVENTION

A tennis ball container disclosed by the present specification includes: a bottle that includes a bottom and a neck, the bottle being transparent; and a paper label that is positioned along an inner peripheral surface of the bottle. The paper label includes biodegradable fibers as main fibers thereof. In an axial direction of the bottle, a position of an upper edge of the paper label is the same as a position of the neck, or the position of the upper edge of the paper label is shifted from the position of the neck toward the bottom.

The above tennis ball container displays necessary information on the paper label thereof. No shrink film is necessary for this container. The paper label is biodegradable. This tennis ball container is environmentally friendly.

### BRIEF DESCRIPTION OF THE DRAWINGS

FIG. 1 is a perspective view showing a tennis ball packaged product according to one embodiment.
FIG. 2 is an exploded front view showing the tennis ball packaged product of FIG. 1.
FIG. 3 is an enlarged sectional view taken along line III-III in FIG. 2.
FIG. 4 is an enlarged sectional view of a part of a container of the packaged product of FIG. 2.
FIG. 5 is a perspective view showing a paper label of the packaged product of FIG. 2.

### DESCRIPTION OF THE PREFERRED EMBODIMENTS

Hereinafter, preferred embodiments are described in detail with appropriate reference to the drawings.

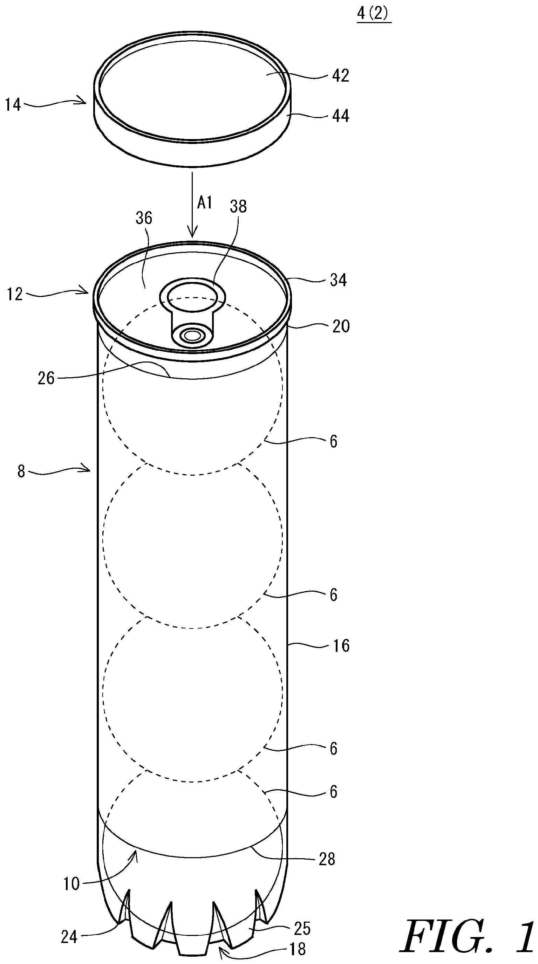

FIGS. 1 to 4 show a tennis ball packaged product 2, which includes a container 4 and four tennis balls 6. The tennis balls 6 are contained in the container 4. The number of tennis balls 6 included in the packaged product 2 may be three or less, or may be five or more. The container 4 includes a bottle 8, a paper label 10, an inner lid 12, and a paper cap 14.

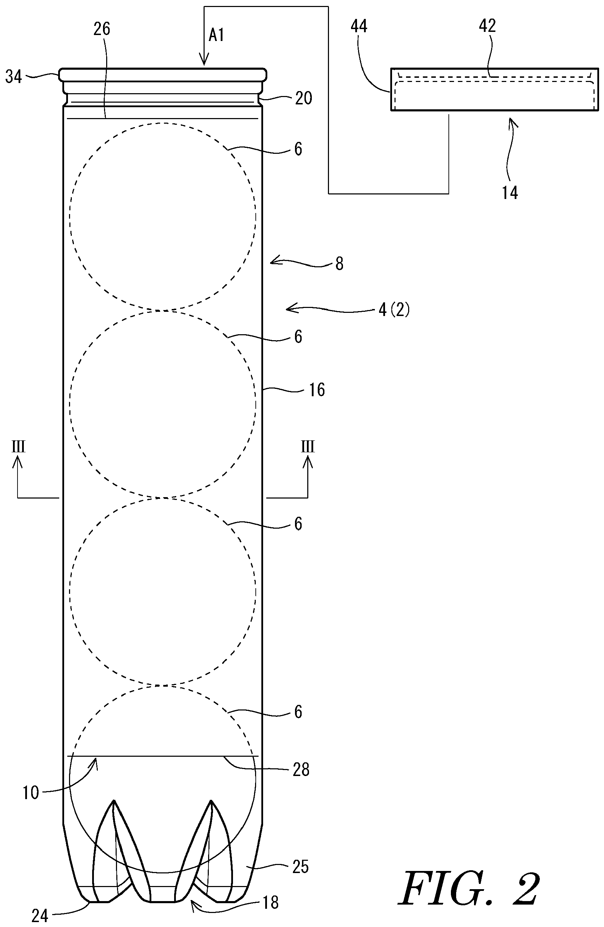

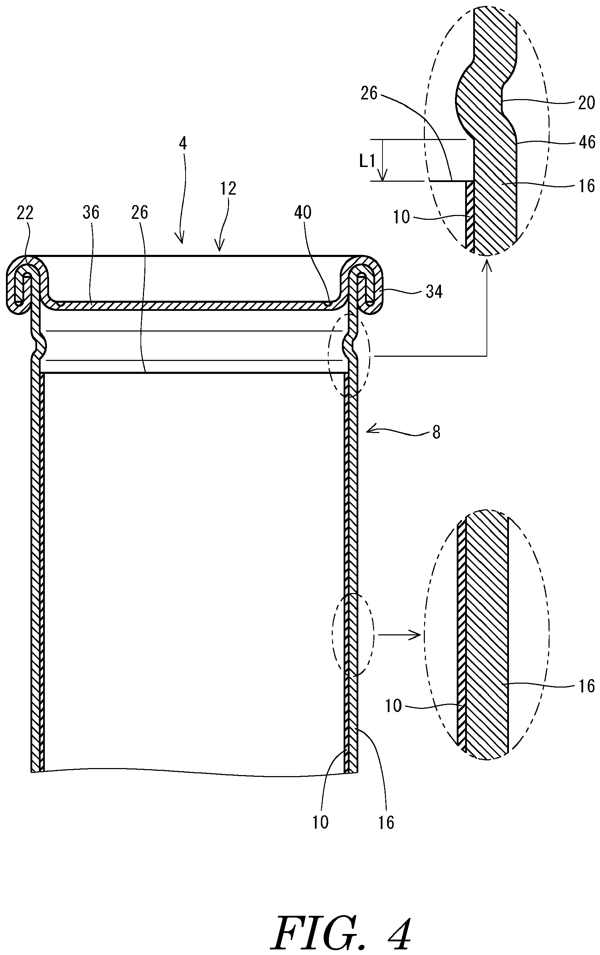

The bottle 8 includes a body 16, a bottom 18, and a neck 20. The body 16 has a generally cylindrical shape. As shown in FIG. 4, the body 16 includes a top 22. The body 16 is open at the top 22. As shown in FIG. 2, the body 16 includes a tail 24. The bottom 18 seals the body 16 at the tail 24. The bottom 18 is integrated with the body 16. The neck 20 is positioned slightly below the top 22. The external diameter of the neck 20 is slightly less than the external diameter of the body 16. The bottom 18 includes a plurality of legs 25. The bottom 18 is a petaloid bottom. The bottom of the bottle 8 may be a flat bottom (a champagne bottom).

The material of the bottle 8 is a synthetic resin composition. A typical base resin of the bottle 8 is polyethylene terephthalate. The bottle 8 is transparent. In the present specification, the bottle 8 being "transparent" means that the inside of the bottle 8 can be seen from the outside of the bottle 8. The term "transparent" in the present specification encompasses the meaning of "semi-transparent". The haze of the body 16 measured in accordance with "JIS K 7136" standard is preferably less than or equal to 75.

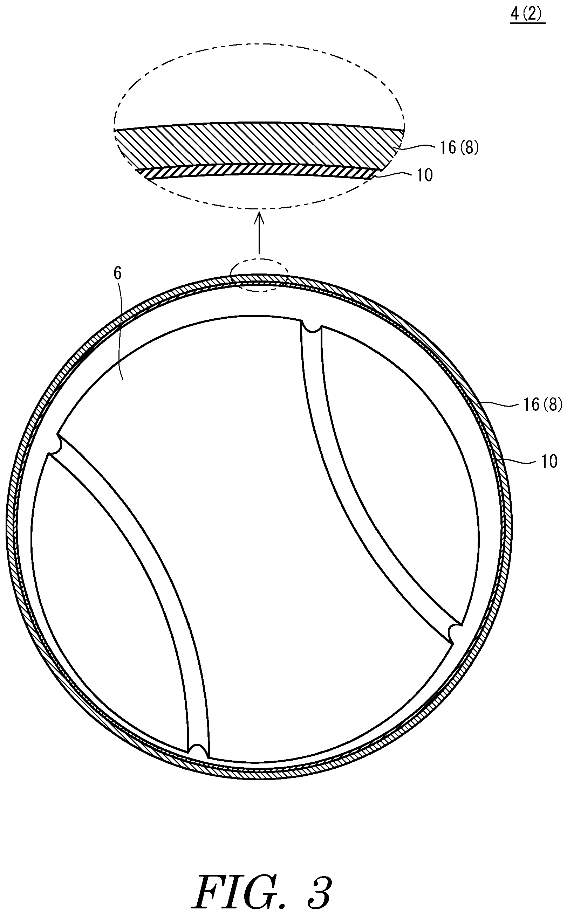

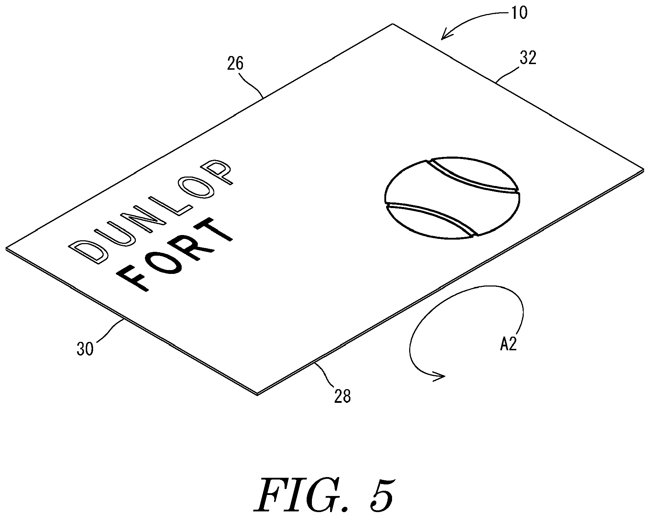

As shown in FIG. 3, the paper label 10 is accommodated in the bottle 8. The paper label 10 is positioned along the inner peripheral surface of the body 16. FIG. 5 shows the paper label 10 before it is accommodated in the bottle 8. The paper label 10 is flat. The paper label 10 includes an upper edge 26, a lower edge 28, a first side edge 30, and a second side edge 32. The paper label 10 is rolled into a cylindrical form and put into the bottle 8. As a result, the paper label 10 exerts its shape restoring force. The shape restoring force causes the paper label 10 to be placed along the inner peripheral surface of the body 16. Therefore, the paper label 10 need not be glued to the body 16. The paper label 10 may be glued to the body 16 as necessary. As shown in FIG. 4, in the present embodiment, the upper edge 26 is positioned slightly below the neck 20. Although not illustrated, in a state where the paper label 10 is accommodated in the bottle 8, the second side edge 32 and the vicinity thereof overlaps the first side edge 30 and the vicinity thereof.

The paper label 10 can be obtained by printing paper. The paper is obtained by agglutinating a large number of fibers together. In the present embodiment, the paper of the paper label 10 is obtained by agglutinating biodegradable fibers together. Accordingly, the paper label 10 can be decomposed by microorganisms into inorganic substances.

The inner lid 12 includes a ring frame 34, a main plate 36, and a pull tab 38 (see FIG. 1). The boundary between the ring frame 34 and the main plate 36 is a score 40 (see FIG. 4). The inner lid 12 is an easy-open lid of a full-open type. The material of the inner lid 12 is a metal. Atypical material of the inner lid 12 is an aluminum alloy. The ring frame 34 and a part of the bottle 8, the part including the top 22 and the vicinity thereof, are curled up and interlocked together. This structure is called "double seam". By the double seam, the inner lid 12 is firmly fixed to the bottle 8. The air-tightness of the container 4 is achieved by the double seam. The double seam may include a seal between the ring frame 34 and the aforementioned part of the bottle 8, the part including the top 22 and the vicinity thereof. A preferable material of the seal is a crosslinked rubber composition or a resin composition.

As indicated by an arrow A1 in FIGS. 1 and 2, the paper cap 14 is fitted to the bottle 8. The paper cap 14 covers the aforementioned part of the bottle 8, the part including the top 22 and the vicinity thereof, and the inner lid 12. The paper cap 14 includes top paper 42 and side paper 44. The paper cap 14 can be obtained by printing paper. The paper is obtained by agglutinating a large number of fibers together. In the present embodiment, the paper of the paper cap 14 is obtained by agglutinating biodegradable fibers together. Accordingly, the paper cap 14 can be decomposed by microorganisms into inorganic substances.

To obtain the tennis ball packaged product 2, the flat paper label 10 is rolled as indicated by an arrow A2 in FIG. 5. The paper label 10 thus rolled has a cylindrical shape. The cylindrical paper label 10 is put into the bottle 8. As previously mentioned, the paper label 10 has shape restorability. Therefore, the cylindrical paper label 10 changes its shape in such a direction as to increase its diameter. As a result of the change in the shape, the paper label 10 is positioned along the inner peripheral surface of the body 16. A plurality of tennis balls 6 are sequentially put into the bottle 8. In the present embodiment, four tennis balls 6 are put into the bottle 8. Then, the inner lid 12 is put over the bottle 8, and the inner lid 12 and the bottle 8 are interlocked to form a double seam. The double seam is formed in an atmosphere that has a higher pressure than the atmospheric pressure. By the double seam, a high-pressure gas is confined in the bottle 8. Then, the paper cap 14 is put over the bottle 8, and thereby the tennis ball packaged product 2 is completed. In a case where the tennis balls 6 are pressure-less balls, the internal pressure of the bottle 8 may be the same as the atmospheric pressure.

A plurality of tennis ball packaged products 2 are packed into, for example, a cardboard box. The cardboard box is transported and stored in a storage. In a shop, each packaged product 2 is taken out of the cardboard box, and then displayed in the shop. A player who has purchased the packaged product 2 from the shop goes to, for example, a tennis court while carrying the purchased packaged product 2 with them. The player removes the paper cap 14 from the bottle 8. The player then pulls the pull tab 38 to remove the main plate 36 from the ring frame 34. As a result of the main plate 36 being removed from the ring frame 34, an opening of the bottle 8 is formed. The player takes the tennis balls 6 through the opening, and uses them. The bottle 8 is recyclable. Since information is presented by the paper label 10, it is unnecessary to print the information on the bottle 8. The bottle 8 with no printing thereon is suitable for recycling. The paper label 10 and the paper cap 14 are to be discarded. The paper label 10 and the paper cap 14 may be used as a raw material for recycled paper.

As previously described, the paper label 10 is biodegradable. Therefore, even if the paper label 10 is littered, it will not continue to exist in nature. The container 4 is less likely to destroy the natural environment. Examples of biodegradable fibers include plant fibers and animal fibers. General synthetic resins are not biodegradable. However, some synthetic resins, such as polylactic acid, are biodegradable. Biodegradable synthetic resin fibers are also suitable for the paper label 10. In light of sustainability of petroleum resources, plant fibers and animal fibers are preferable. Typically, paper made of woody fibers is used as the paper label 10. Paper with a coating on its surface is also usable for the paper label 10. Preferably, the material of the coating is a biodegradable resin. Examples of suitable base paper for the paper label 10 include wood-free paper, coated paper, kraft paper, recycled paper, and synthetic paper.

The paper of the paper label 10 may include both biodegradable fibers and non-biodegradable fibers. Preferably, the paper label 10 includes biodegradable fibers as main fibers thereof. In other words, in the paper label 10, the ratio of the biodegradable fibers to the total fiber content is preferably greater than or equal to 50% by mass. This ratio is more preferably greater than or equal to 80% by mass, and particularly preferably greater than or equal to 90% by mass. Ideally, this ratio is 100% by mass.

As previously described, the paper cap 14 is biodegradable. Therefore, even if the paper cap 14 is littered, it will not continue to exist in nature. The container 4 is less likely to destroy the natural environment. The fibers mentioned above for the paper label 10 are suitable also for the paper cap 14. That is, plant fibers and animal fibers are suitable for the paper cap 14. Biodegradable synthetic resin fibers may be used for the paper cap 14. The paper of the paper cap 14 may include both biodegradable fibers and non-biodegradable fibers. In this case, in the paper cap 14, the ratio of the biodegradable fibers to the total fiber content is preferably greater than or equal to 50% by mass, more preferably greater than or equal to 80% by mass, and particularly preferably greater than or equal to 90% by mass. Ideally, this ratio is 100% by mass. The container 4 may include a cap that is a molded product of a synthetic resin.

As previously described, the bottle 8 is transparent. Therefore, the paper label 10 can be seen through the bottle 8. A person can recognize information displayed by the paper label 10 (e.g., a brand name, a manufacturer name, a content amount, a mark required by law, etc.) without opening the bottle 8.

The bottle 8 is impermeable to water. Therefore, even if water touches the bottle 8, the water does not come into contact with the label. Thus, no damage to the paper label 10 is caused by water. In addition, even if the bottle 8 rubs against another object, the paper label 10 will not be damaged.

The paper label 10 is irradiated with rays of light that have passed through the bottle 8. In order to suppress deterioration and discoloration of the paper label 10 due to the rays of light, printing on the paper label 10 is preferably done with a light-fast ink.

In the tennis ball packaged product 2, the tennis balls 6 are present inside the paper label 10, which is positioned along the inner peripheral surface of the body 16. Therefore, the rays of light can be shielded by the paper label 10. The container 4 can suppress the tennis balls 6 from being irradiated with rays of light (from the sun and lighting equipment). In the packaged product 2, discoloration of the tennis balls 6 is suppressed.

It is clear from FIG. 3 that the paper label 10 is positioned circumferentially along the entire inner peripheral surface of the body 16. The paper label 10 can sufficiently shield the rays of light. The paper label 10 can sufficiently suppress discoloration of the tennis balls 6. The material of the surface of each tennis ball 6 is felt. The fluff of the felt is hardly caught by the paper label 10, which is positioned circumferentially along the entire inner peripheral surface of the body 16. Alternatively, the tennis balls 6 may be contained in the container 4 in which, partly in the circumferential direction, the paper label 10 is not present.

In FIG. 4, an arrow L1 represents a distance that is measured downward in the axial direction of the bottle 8 from a lower end 46 of the neck 20 to the upper edge 26 of the paper label 10. The distance L1 is preferably greater than or equal to 0 mm. In other words, preferably, the position of the upper edge 26 of the paper label 10 is the same as the position of the lower end 46 of the neck 20, or the position of the upper edge 26 of the paper label 10 is shifted from the position of the lower end 46 of the neck 20 toward the bottom 18. In the tennis ball packaged product 2, the paper label 10 is less likely to be displaced during transportation. Accordingly, during transportation, wrinkling of the paper label 10 can be suppressed. In light of this, the distance L1 is particularly preferably greater than or equal to 1 mm. The distance L1 is preferably less than or equal to 4 mm. In a case where the distance L1 is less than or equal to 4 mm, the container 4 can suppress the tennis balls 6 from being irradiated with rays of light. In light of this, the distance L1 is more preferably less than or equal to 3 mm, and particularly preferably less than or equal to 2 mm.

The basis weight of the paper label 10 is preferably greater than or equal to 75 g/m². The paper label 10 having the basis weight within this range is excellent in shape restorability. The paper label 10 having the basis weight within this range is also excellent in shieldability against rays of light. From the viewpoints of shape restorability and shieldability against rays of light, the basis weight is more preferably greater than or equal to 95 g/m², and particularly preferably greater than or equal to 105 g/m². In light of handleability of the paper label 10, the basis weight is preferably less than or equal to 215 g/m², more preferably less than or equal to 195 g/m², and particularly preferably less than or equal to 175 g/m².

### Examples

The following elucidates the effects of the tennis ball container according to Examples. However, the scope of the disclosure in the present specification should not be restrictively construed based on the description of the Examples below.

### [Example 1]

The tennis ball container as shown in FIGS. 1 to 4 was fabricated. The container included the paper label whose basis weight was 105 g/m². The distance L1 between the lower end of the neck and the upper edge of the paper label was 1 mm.

### [Examples 2 to 5 and Comparative Examples 1 to 2]

Tennis ball containers of Examples 2 to 5 and Comparative Examples 1 to 2 were obtained in the same manner as Example 1, except that the distance L1 was varied as shown in Tables 1 and 2 below. In the containers of Comparative Examples 1 to 2, the upper edge of the paper label is positioned upward (i.e., upward in FIG. 4) of the lower end of the neck.

### [Examples 6 to 9]

Tennis ball containers of Examples 6 to 9 were obtained in the same manner as Example 1, except that the basis weight of the paper label was varied as shown in Table 2 below.

### [Light Fastness Test]

In conformity to the "JIS L 0842" standard, a carbon arc irradiation test (grade 4) was performed. The tennis ball containers with tennis balls contained therein were used as test samples. An ultraviolet carbon arc lamp as a light source was set at a distance of 25 cm from the surface of each test sample, and each test sample was irradiated with light from the light source. The light irradiation was continued until the blue scale grade 4, defined by the above JIS standard, faded to reach standard fading. The Lab value of each tennis ball before the irradiation and the Lab value of each tennis ball after the irradiation were measured by a colorimeter, and a color difference ΔE was calculated for each tennis ball from these measured Lab values. The results are shown in Tables 1 and 2 below.

### [Work Efficiency]

A proficient worker put tennis balls into the tennis ball containers. The worker evaluated work efficiency for each of the tennis ball containers in accordance with the evaluation criteria A to C indicated below. The results are shown in Tables 1 and 2 below.
A: Work efficiency is good.
B: The balls sometimes get caught by the paper label.
C: The balls often get caught by the paper label.

### [Appearance Evaluation]

Tennis balls were put into the containers, and thereby tennis ball packaged products were obtained. The packaged products were packed into a commercially available cardboard box. The cardboard box with the packaged products packed therein was loaded into a truck, and the truck transported the cardboard box to a location distant from the loading location by 70 km. Thereafter, the condition of the paper label of each of the tennis ball packaged products was visually checked by three evaluators. The three evaluators consulted together and determined the evaluation of the appearance of the paper label of each tennis ball packaged product in accordance with the evaluation criteria A to C indicated below. The results are shown in Tables 1 and 2 below.
A: The appearance is good.
B: There are some wrinkles near the upper edge.
C: There are many wrinkles near the upper edge.

**Table 1: Evaluation Results**

| | Comp. Ex. 1 | Comp. Ex. 2 | Ex. 2 | Ex. 1 | Ex. 3 | Ex. 4 | Ex. 5 |
|---|---|---|---|---|---|---|---|
| Distance L1 (mm) | -2 | -1 | 0 | 1 | 2 | 4 | 6 |
| Basis weight | 105 | 105 | 105 | 105 | 105 | 105 | 105 |
| ΔE | 1.89 | 2.73 | 3.72 | 5.05 | 5.74 | 7.21 | 11.36 |
| Work efficiency | B | B | A | A | A | A | A |
| Appearance | C | C | B | A | A | A | A |

**Table 2: Evaluation Results**

| | Ex. 6 | Ex. 7 | Ex. 8 | Ex. 9 |
|---|---|---|---|---|
| Distance L1 (mm) | 1 | 1 | 1 | 1 |
| Basis weight | 25 | 75 | 175 | 215 |
| ΔE | 18.86 | 7.81 | 2.71 | 2.20 |
| Work efficiency | B | A | A | B |
| Appearance | B | A | A | A |

It is clear from Tables 1 and 2 that the tennis ball container of each Example is excellent in terms of the above evaluation items. These evaluation results clearly indicate the superiority of the container of each Example.

### [Disclosure Items]

The following items each disclose a preferred embodiment.

### [Item 1]

A tennis ball container including: a bottle that includes a bottom and a neck, the bottle being transparent; and a paper label that is positioned along an inner peripheral surface of the bottle, wherein the paper label includes biodegradable fibers as main fibers thereof, and in an axial direction of the bottle, a position of an upper edge of the paper label is the same as a position of the neck, or the position of the upper edge of the paper label is shifted from the position of the neck toward the bottom.

### [Item 2]

The tennis ball container according to item 1, wherein the paper label is positioned circumferentially along the entire inner peripheral surface of the bottle.

### [Item 3]

The tennis ball container according to item 1 or 2, wherein in the axial direction of the bottle, a distance between the upper edge of the paper label and the neck is greater than or equal to 0 mm and less than or equal to 4 mm.

### [Item 4]

The tennis ball container according to any one of items 1 to 3, wherein a basis weight of the paper label is greater than or equal to 75 g/m².

### [Item 5]

The tennis ball container according to any one of items 1 to 4, further comprising a paper cap that is fitted to the bottle, wherein the paper cap includes biodegradable fibers as main fibers thereof.

### [Item 6]

A tennis ball packaged product including: (1) a tennis ball container including a bottle and a paper label, the bottle including a bottom and a neck and being transparent, the paper label being positioned along an inner peripheral surface of the bottle, wherein the paper label includes biodegradable fibers as main fibers thereof, and in an axial direction of the bottle, a position of an upper edge of the paper label is the same as a position of the neck, or the position of the upper edge of the paper label is shifted from the position of the neck toward the bottom; and (2) a tennis ball contained in the bottle.

The above-described container is suitable for containing various articles therein. The above descriptions are merely illustrative examples, and various modifications can be made without departing from the principles of the present invention.

## Claims

1. A tennis ball container comprising:
a bottle that includes a bottom and a neck, the bottle being transparent; and
a paper label that is positioned along an inner peripheral surface of the bottle, wherein
the paper label includes biodegradable fibers as main fibers thereof, and
in an axial direction of the bottle, a position of an upper edge of the paper label is the same as a position of the neck, or the position of the upper edge of the paper label is shifted from the position of the neck toward the bottom.

2. The tennis ball container according to claim 1, wherein
the paper label is positioned circumferentially along the entire inner peripheral surface of the bottle.

3. The tennis ball container according to claim 1 or claim 2, wherein
in the axial direction of the bottle, a distance between the upper edge of the paper label and the neck is greater than or equal to 0 mm and less than or equal to 4 mm.

4. The tennis ball container according to one of claims 1 to 3, wherein the distance is less than or equal to 3 mm, and preferably less than or equal to 2 mm.

5. The tennis ball container according to one of claims 1 to 4, wherein
a basis weight of the paper label is greater than or equal to 75 g/m².

6. The tennis ball container according to claim 5, wherein the basis weight is greater than or equal to 95 g/m², and preferably is greater than or equal to 105 g/m².

7. The tennis ball container according to claim 5 or claim 6, wherein the basis weight is less than or equal to 215 g/m², preferably less than or equal to 195 g/m², and particularly preferably less than or equal to 175 g/m².

8. The tennis ball container according to one of claims 1 to 7, further comprising a paper cap that is fitted to the bottle, wherein
the paper cap includes biodegradable fibers as main fibers thereof.

9. The tennis ball container according to one of claims 1 to 8, wherein the biodegradable fibers of the paper label or of the paper cap are selected from the group of fibers comprising plant fibers, animal fibers and synthetic biodegradable resins.

10. The tennis ball container according to claim 8 or claim 9, wherein the paper of the paper label and/or of the paper cap includes both biodegradable fibers and non-biodegradable fibers.

11. The tennis ball container according to one of claims 1 to 10, wherein the ratio of the biodegradable fibers to the total fiber content is greater than or equal to 80% by mass, and particularly preferably greater than or equal to 90% by mass.

12. The tennis ball container according to one of claims 1 to 11, wherein the content of the biodegradable fibers of the paper label or of the paper cup is 100% by mass.

13. The tennis ball container according to one of claims 1 to 12, wherein a material of the bottle is a synthetic resin composition, preferably wherein a base resin of the bottle is polyethylene terephthalate.

14. The tennis ball container according to one of claims 1 to 13, wherein a haze of the bottle measured in accordance with "JIS K 7136" standard is less than or equal to 75.

15. A tennis ball packaged product comprising:
(1) a tennis ball container including a bottle and a paper label, the bottle including a bottom and a neck and being transparent, the paper label being positioned along an inner peripheral surface of the bottle, wherein the paper label includes biodegradable fibers as main fibers thereof, and in an axial direction of the bottle, a position of an upper edge of the paper label is the same as a position of the neck, or the position of the upper edge of the paper label is shifted from the position of the neck toward the bottom; and
(2) a tennis ball contained in the bottle.
